# EUROPEAN PATENT SPECIFICATION

(11) **EP 2 905 450 B1**
(45) Date of publication and mention of the grant of the patent: **30.05.2018**
(21) Application number: 13843592.0
(22) Date of filing: 03.10.2013
(51) Int. Cl.: F02D 13/02, F02B 25/04, F02D 19/02, F02D 43/00, F02D 45/00, F02D 41/30, F02D 41/00

(54) **UNIFLOW SCAVENGING 2-CYCLE ENGINE**
ZWEITAKTMOTOR MIT GLEICHSTROMSPÜLUNG
MOTEUR À 2 TEMPS À BALAYAGE À FLUX UNIQUE

(30) Priority: 03.10.2012 JP 2012220901
(43) Date of publication of application: 12.08.2015
(73) Proprietor: IHI Corporation, Tokyo 135-8710 (JP)
(72) Inventor: MASUDA Yutaka, Tokyo 135-8710 (JP); YAMADA Takayuki, Tokyo 135-8710 (JP); HIROSE Takayuki, Tokyo 135-8710 (JP); KUGE Takahiro, Tokyo 135-8710 (JP); YAMADA Takeshi, Tokyo 135-8710 (JP)
(74) Representative: TBK
(86) International application number: PCT/JP2013/076941
(87) International publication number: WO 2014/054732

(56) References cited:
- WO-A1-2012/018071
- DE-A1- 4 241 429
- JP-A- H 084 505
- JP-A- H10 110 634
- JP-A- 2000 064 859
- JP-A- 2000 064 859
- US-A1- 2012 240 887

## Description

The present invention relates to a uniflow scavenging 2-cycle engine that burns a premixed gas generated by injecting a fuel gas into an active gas suctioned from scavenging ports.

In a uniflow scavenging 2-cycle engine (2-stroke engine) that is used as an engine of a ship, an exhaust port is provided at one end of a cylinder in a stroke direction of a piston, and scavenging ports are provided at the other end side of the cylinder in the stroke direction of the piston. Thus, in a downward process of the piston, when the piston moves down to positions of the scavenging ports, the scavenging ports are open, and an active gas is suctioned from the scavenging ports into a combustion chamber. Then, an exhaust gas generated by a combustion effect is forced and exhausted out of the exhaust port by the suctioned active gas. At this time, a fuel gas is injected into the suctioned active gas, thereby producing a premixed gas. The combustion effect is obtained by compressing the produced premixed gas. Due to an explosion pressure generated by the combustion effect, the piston reciprocates in the cylinder.

In such a uniflow scavenging 2-cycle engine, for example, as shown in JP H03-061 611 A and JP H06-035 830 B2, the exhaust valve for opening and closing the exhaust port is provided, and an opening or closing timing of the exhaust valve is controlled depending on a load or operation situation of the engine.

In a scavenging process of replacing the exhaust gas with the air (active gas) in the cylinder, to avoid stagnation of the exhaust gas and to reliably exhaust the exhaust gas, the active gas suctioned from the scavenging ports is also somewhat exhausted (or undergoes blow-by) from the exhaust port together with the exhaust gas. To prevent the fuel gas to be premixed also undergoing the blow-by along with this blow-by of the active gas, there is no alternative but to inject the fuel gas quickly just before the closing timing of the exhaust valve.

As described above, if the injection time of the fuel gas is restricted, a large quantity of fuel gas should be injected quickly. As a result, the fuel gas is not sufficiently mixed with the active gas, and a portion at which a concentration of the fuel gas is locally high occurs. Under such a situation, abnormal combustion such as knocking or pre-ignition occurs, and normal operation may be difficult.

Furthermore, JP 2000 064 859 A discloses a uniflow scavenging 2-cycle engine according to the preamble of claim 1. Further uniflow scavenging 2-cycle engines are known from WO 2012/018 071 A1, US 2012/240887 A1 and DE 42 41 429 A1.

The present invention has been considering the above problems, and an object of the present invention is to provide a uniflow scavenging 2-cycle engine that advances an injection start timing of the fuel gas while suppressing blow-by of the fuel gas, thereby preventing abnormal combustion to enable normal operation at all times.

### [Solution to Problem]

According to the present invention, the above object is solved with a uniflow scavenging 2-cycle engine having the features of claim 1. Further embodiments are laid down in the sub-claims.

According to the uniflow scavenging 2-cycle engine of the present invention, an injection start timing of the fuel gas is advanced while blow-by of the fuel gas is suppressed. Thereby, abnormal combustion is prevented to enable normal operation at all times.

FIG. 1 is an explanatory view showing an overall constitution of a uniflow scavenging 2-cycle engine.
FIG. 2 is an explanatory view showing a basic operation of each controller.
FIG. 3A is an explanatory view showing a specific constitution of an exhaust valve driving mechanism.
FIG. 3B is an explanatory view showing a specific constitution of the exhaust valve driving mechanism.
FIG. 4A is a timing chart for explaining a closing timing of an exhaust valve and an injection start timing of fuel injection valves.
FIG. 4B is a timing chart for explaining a closing timing of the exhaust valve and an injection start timing of the fuel injection valves.
FIG. 5A is a timing chart for explaining a closing timing of the exhaust valve and an injection start timing of the fuel injection valves.
FIG. 5B is a timing chart for explaining a closing timing of the exhaust valve and an injection start timing of the fuel injection valves.
FIG. 6 is a timing chart for explaining a closing timing of the exhaust valve and an injection start timing of the fuel injection valves.

### [Description of Embodiments]

Hereinafter, preferred embodiments of the present invention will be described in detail with reference to the attached drawings. Dimensions, materials, other specific numerical values, and so on indicated in these embodiments are merely examples for facilitating comprehension of the invention, and unless indicated otherwise, the present invention is not limited thereto. Note that, in the specification and drawings, elements having substantially the same functions and constitutions will be given the same reference numerals, and duplicate description thereof will be omitted. Further, elements not directly related to the present invention are not shown in the drawings.

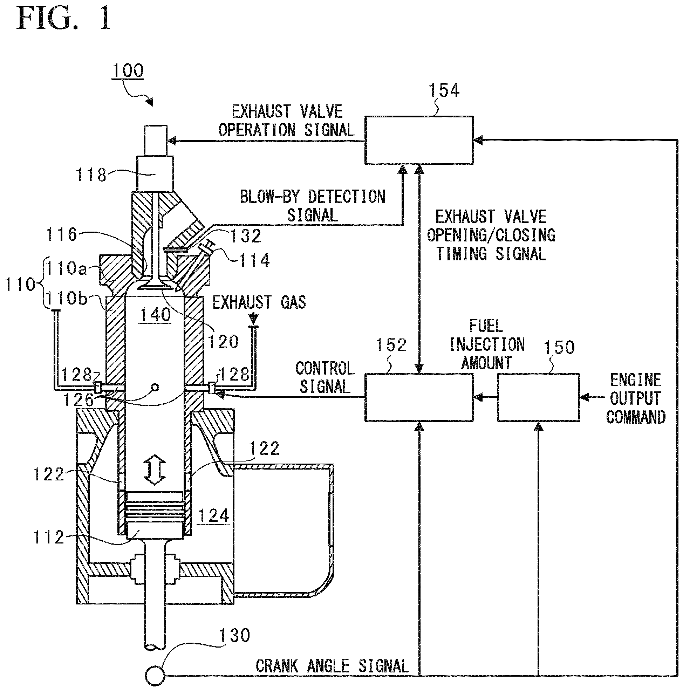

FIG. 1 is an explanatory view showing an overall constitution of a uniflow scavenging 2-cycle engine 100. The uniflow scavenging 2-cycle engine 100 of the present embodiment is used in, for instance, a ship. Specifically, the uniflow scavenging 2-cycle engine 100 includes a cylinder 110 (with a cylinder head 110a and a cylinder block 110b), a piston 112, a pilot injection valve 114, an exhaust port 116, an exhaust valve driving mechanism 118, an exhaust valve 120, scavenging ports 122, a scavenging room 124, fuel injection ports 126, fuel injection valves 128, a rotary encoder 130, a blow-by detector 132, and a combustion chamber 140, and is controlled by controllers such as a governor (speed regulator) 150, a fuel injection controller 152, an exhaust controller 154, and so on.

In the uniflow scavenging 2-cycle engine 100, the piston 112 connected to a crosshead (not shown) slidably reciprocates in the cylinder 110 through a series of processes called intake (induction), compression, combustion, expansion, and exhaust. In this crosshead type of piston 112, a relatively long stroke can be formed in the cylinder 110, and a lateral pressure acting on the piston 112 can be exerted on the crosshead. Thus, it is possible to facilitate high power of the uniflow scavenging 2-cycle engine 100. Further, since the cylinder 110 and a crank room (not shown) in which the crosshead is housed are isolated, even when low-grade fuel oil is used, contamination and deterioration of members located at the crank room side can be prevented.

The pilot injection valve 114 is installed on the cylinder head 110a that is one end of the cylinder 110 in a stroke direction and is higher than the top dead center of the piston 112, and injects an appropriate amount of fuel oil at a desired point in time in an engine cycle. The injected fuel oil is spontaneously ignited by heat of the combustion chamber 140 enclosed by the cylinder head 110a, a cylinder liner in the cylinder block 110b, and the piston 112, is burnt in a brief period of time, and greatly increases the temperature of the combustion chamber 140. Thus, a premixed gas including a fuel gas can be reliably burnt at a desired timing.

The exhaust port 116 is an opening provided at one end side of the cylinder 110 in a stroke direction of the piston 112, that is, in the top of the cylinder head 110a higher than the top dead center of the piston 112, and is opened and closed to discharge an exhaust gas after combustion generated in the cylinder 110. The exhaust valve driving mechanism 118 slides the exhaust valve 120 at a given timing to open and close the exhaust port 116. Thereby, the exhaust gas exhausted via the exhaust port 116 is supplied to, for instance, a turbine side of a supercharger (not shown), and then is exhausted to the outside.

The scavenging ports 122 are openings formed in an inner circumferential surface of the other end side of the cylinder 110 in the stroke direction of the piston 112 (i.e., an inner circumferential surface of the cylinder block 110b), and suction the active gas into the cylinder 110 according to the sliding motion of the piston 112. The active gas contains an oxidant such as oxygen or ozone, or a mixture thereof (e.g., air). The active gas (e.g., air) pressurized by a compressor of the supercharger (not shown) is enclosed in the scavenging room 124, and is suctioned from the scavenging ports 122 by a differential pressure between the scavenging room 124 and the inside of the cylinder 110. A pressure of the scavenging room 124 may be made substantially constant. However, when the pressure of the scavenging room 124 is changed, pressure gauges are provided for the scavenging ports 122, and an injection amount of the fuel gas and other parameters may be controlled depending on measured values thereof.

The fuel injection ports 126 are multiple openings that are formed at predetermined intervals in a substantially circumferential direction (which allows displacement in the stroke direction in addition to a complete circumferential direction) in the inner circumferential surface of the cylinder 110 (between the exhaust port 116 and the scavenging ports 122).

The fuel injection valves 128 are disposed in the respective fuel injection ports 126, and receive a command from the fuel injection controller 152 to inject the fuel gas obtained by gasifying, for instance, liquefied natural gas (LNG). Thereby, the fuel gas is supplied into the cylinder 110. Further, the fuel gas is not limited to LNG, and gases obtained by gasifying, for instance, liquefied petroleum gas (LPG), gas oil, heavy oil, and so on may also be employed.

The rotary encoder 130 is installed on a crank mechanism (not shown), and detects the angle signal of a crank (hereinafter referred to as "crank angle signal").

The blow-by detector 132 is installed on an exhaust pipe downstream from the exhaust port 116, and detects an amount of a fuel gas component (e.g., a hydrocarbon) contained in the exhaust gas exhausted from the exhaust port 116, that is, an amount of blow-by of the fuel gas.

The governor 150 derives a fuel injection amount based on an engine output command value input from a main control unit and an engine speed caused by the crank angle signal from the rotary encoder 130, and outputs the derived fuel injection amount to the fuel injection controller 152.

The fuel injection controller 152 controls the fuel injection valves 128 through a control signal based on information indicating the fuel injection amount input from the governor 150 and the crank angle signal from the rotary encoder 130.

The exhaust controller 154 outputs an exhaust valve operation signal for controlling a degree of opening of the exhaust valve 120 to the exhaust valve driving mechanism 118 based on an exhaust valve opening/closing timing signal from the fuel injection controller 152, the crank angle signal from the rotary encoder 130, and a blow-by detection signal (the amount of blow-by) from the blow-by detector 132. Hereinafter, an operation of each controller in the engine cycle of the aforementioned uniflow scavenging 2-cycle engine 100 will be described.

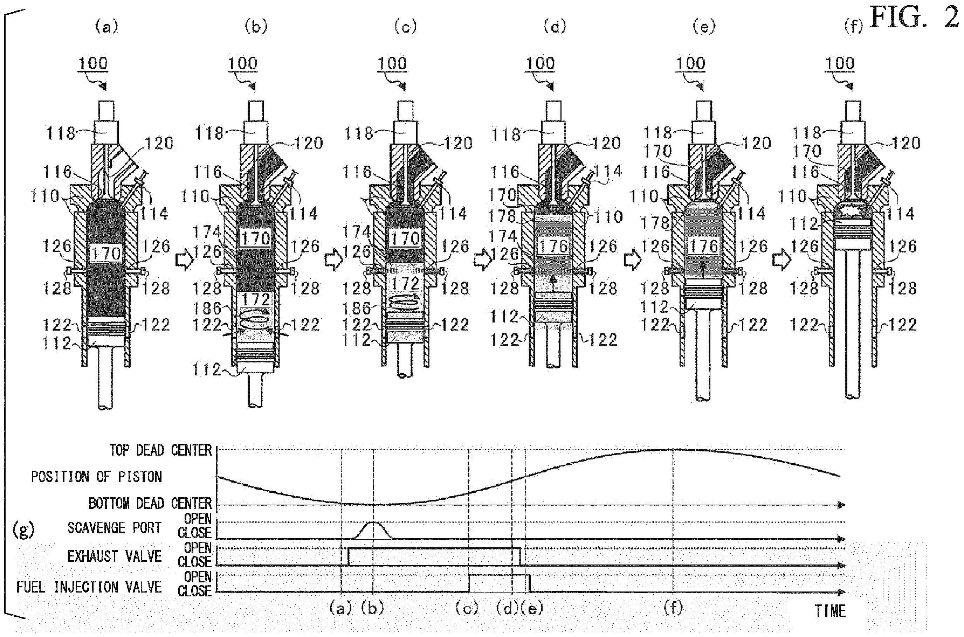

FIG. 2 is an explanatory view showing a specific operation of each controller. Especially, (a) to (f) in FIG. 2 are vertical cross-sectional views of the uniflow scavenging 2-cycle engine 100, and (g) in FIG. 2 shows a timing chart for representing a time relation between states shown in (a) to (f) in FIG. 2. In FIG. 2, the cycle in the uniflow scavenging 2-cycle engine 100 will be described in the order of expansion, exhaust, intake, compression, and combustion.

In an expansion process, as shown in (a) in FIG. 2, the exhaust valve 120 and the scavenging ports 122 are in a closed state, and the inside of the cylinder 110 is filled with an exhaust gas 170. When the piston 112 moves down to approach the bottom dead center due to a combustion pressure, the exhaust controller 154 opens the exhaust valve 120 through the exhaust valve driving mechanism 118, and transitions to an exhaust process. Further, when the piston 112 moves further down according to a sliding motion of the piston 112, the scavenging ports 122 are opened. In this intake process, as shown in (b) in FIG. 2, an active gas 172 is suctioned from the scavenging ports 122, moves up while forming a swirl 186 for facilitating mixture with the fuel gas 174, and pushes the exhaust gas 170 in the cylinder 110 out of the exhaust port 116.

Then, when the piston 112 moves up from the bottom dead center toward the top dead center, the scavenging ports 122 are closed, and the suction of the active gas 172 is stopped. At this time, the exhaust controller 154 maintains the exhaust valve 120 in an opened state. For this reason, the exhaust gas 170 of the combustion chamber 140 (inside the cylinder 110) continues to be exhausted from the exhaust port 116 by the upward movement of the piston 112 is exhausted from the exhaust port 116.

Thus, as shown in (c) in FIG. 2, when a boundary between the exhaust gas 170 and the active gas 172 in connection with the suction of the active gas 172 reaches the fuel injection ports 126, the fuel injection controller 152 starts injection of the fuel gas 174 from the fuel injection valves 128 into the cylinder 110 based on information indicating a fuel injection amount input from the governor 150 or an engine speed derived by a crank angle signal from the rotary encoder 130.

Thereby, the fuel gas 174 is injected into the active gas 172 suctioned from the scavenging ports 122, and a premixed gas is generated at the combustion chamber 140 (in the cylinder 110). At this time, the exhaust valve 120 is kept open, and a pressure in the cylinder 110 is still in a low state. For this reason, even when the fuel injection valves 128 are not subjected to a high pressure (or are under a low pressure), the fuel injection valves 128 can adequately inject the fuel gas 174.

However, in the present embodiment, the fuel injection controller 152 does not start the injection of the fuel gas 174 immediately after the active gas 172 arrives at the fuel injection ports 126 from the scavenging ports 122, but starts to inject the fuel gas 174 after a given time has further elapsed. Then, as shown in (d) in FIG. 2, an interlayer 178, which consists essentially of the active gas 172 with which the fuel gas 174 is not mixed, is generated between the premixed gas 176 obtained by mixing the fuel gas 174 and the active gas 172 and the exhaust gas 170.

When the interlayer 178 is generated between the exhaust gas 170 and the premixed gas 176, the exhaust gas 170 can be exhausted from the exhaust port 116 without bringing the exhaust gas 170 of a high temperature into contact with the premixed gas 176. Here, since the interlayer 178 has a thickness to some extent in a vertical direction, even when fluctuation occurs at an interface between the exhaust gas 170 and the interlayer 178, it is possible to avoid the premixed gas 176 to a high temperature. Thus, when the exhaust of the exhaust gas 170 is completed, the exhaust valve driving mechanism 118 closes the exhaust valve 120 as shown in (e) in FIG. 2.

The fuel injection controller 152 continues to inject the fuel gas 174 through the fuel injection valves 128, and stops injecting the fuel gas 174 before the piston 112 reaches the fuel injection ports 126 as shown in (e) in FIG. 2. In this way, once the injection of the fuel gas 174 by the fuel injection controller 152 is almost completed, the premixed gas 176 is compressed to a high pressure through a compression process. Further, the premixed gas 176 is ignited based on injection of diesel oil from the pilot injection valve 114, and is burnt as shown in (f) in FIG. 2. Thus, when the piston 112 is pushed downward by the combustion, the cycle returns to the state shown in (a) in FIG. 2. Afterwards, expansion, exhaust, intake, compression, and combustion processes are repeated.

In the exhaust process, to avoid stagnation of the exhaust gas 170 and to reliably exhaust the exhaust gas 170 from the combustion chamber 140, the closing timing of the exhaust valve 120 is preferably delayed as much as possible. However, if the closing timing of the exhaust valve 120 is simply delayed, the premixed gas 176 is subjected to blow-by, the pressure of the combustion chamber 140 cannot be increased, and the engine power is reduced. Further, there is also a possibility of the premixed gas 176 subjected to the blow-by coming into contact with a high-temperature exhaust gas 170 exhausted from another exhaust port 116, causing unexpected combustion. Accordingly, taking the engine efficiency into account, the exhaust controller 154 may (completely) close the exhaust valve 120 at the timing shown in (e) in FIG. 2, at which the exhaust gas 170 is unlikely to stagnate in the cylinder 110 and the blow-by of the premixed gas 176 can be suppressed.

Here, as described using FIG. 2, a part of the interlayer 178 is allowed to be exhausted along with the exhaust gas 170. Here, to facilitate mixture of the fuel gas 174 and the active gas 172, when an attempt is made to advance the injection start timing of the fuel gas 174, an amount of blow-by of the premixed gas 176 along with the interlayer 178 is increased. Advancing the closing timing of the exhaust valve 120 is also considered along with advancing the injection start timing of the fuel gas 174. However, if the exhaust valve 120 is (completely) closed at an early stage, a temperature or pressure in the cylinder 110 is excessively increased, which may cause abnormal combustion. Thus, the exhaust valve 120 should be (completely) closed at the timing, shown in (e) in FIG. 2, at which even the premixed gas 176 is subjected to the blow-by along with the interlayer 178 and the exhaust controller 154 can still suppress the blow-by of the premixed gas 176. For this reason, the fuel injection controller 152 has no alternative but to inject the fuel gas 174 quickly just before the closing timing of the exhaust valve 120. In this way, when the injection time of the fuel gas 174 is restricted, a large quantity of fuel gas 174 should be injected quickly, and a portion at which a concentration of the fuel gas is locally high occurs. Therefore, in the present embodiment, in consideration of the opening/closing process of the exhaust valve driving mechanism 118, the injection start timing of the fuel gas 174 is advanced while the blow-by of the fuel gas 174 is suppressed, and the injection time of the fuel gas 174 is lengthened.

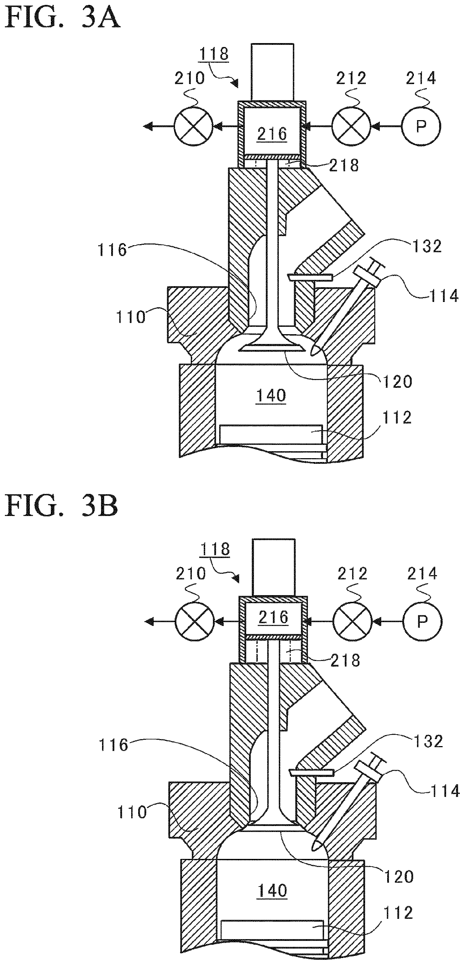

FIGS. 3A and 3B are explanatory views showing a specific constitution of the exhaust valve driving mechanism 118. The exhaust valve driving mechanism 118 includes a first electromagnetic valve 210, a second electromagnetic valve 212, a hydraulic pump 214, a hydraulic chamber 216, and an elastic part 218.

The cycle transitions to the exhaust process. When the second electromagnetic valve 212 is opened with the first electromagnetic valve 210 closed, oil 214a whose pressure is increased by the hydraulic pump 214 flows into the hydraulic chamber 216. Then, as shown in FIG. 3A, a piston 216a in the hydraulic chamber 216 presses the exhaust valve 120 toward the combustion chamber 140 against an elastic force of the elastic part 218, and the exhaust valve 120 is opened to allow the exhaust gas 170 to be exhausted.

Further, the cycle transitions to the compression process. When the first electromagnetic valve 210 is opened with the second electromagnetic valve 212 closed, the oil 214a in the hydraulic chamber 216 flows out. Then, as shown in FIG. 3B, the piston 216a in the hydraulic chamber 216 is pressed back in a direction opposite to the combustion chamber 140 by the elastic force of the elastic part 218, and the exhaust valve 120 is closed.

In the present embodiment, the exhaust controller 154 adjusts an opening time or a degree of opening (flow rate) of the first electromagnetic valve 210 while maintaining the timing at which the closing of the exhaust valve 120 is completed to be the same or nearly the same as the timing, shown in (e) in FIG. 2, at which the blow-by of the premixed gas 176 can be suppressed, and opens and closes the exhaust valve 120 such that a time required to displace the exhaust valve 120 from a fully opened position to a fully closed position is longer than that required to displace the exhaust valve 120 from the fully closed position to the fully opened position.

The time from the fully opened position to the fully closed position is lengthened in this way, and thereby a pressure loss (resistance) occurs at the exhaust gas 170 passing around the exhaust valve 120, and the premixed gas 176 is less undergo the blow-by than the exhaust gas 170. Thus, the injection start timing of the fuel gas 174 can be advanced, and the injection time of the fuel gas 174 can be lengthened.

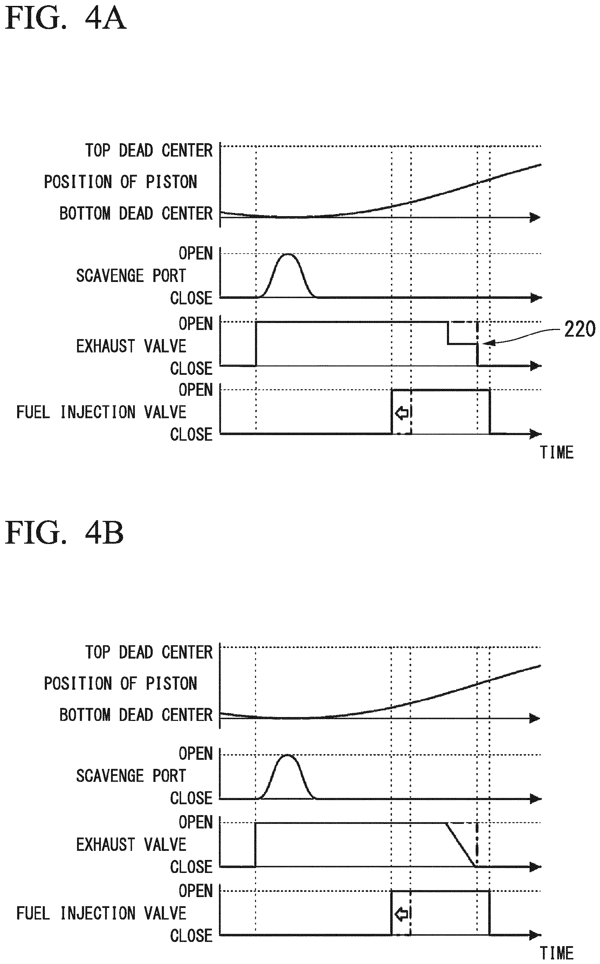

FIGS. 4A and 4B are timing charts for explaining the closing timing of the exhaust valve 120 and the injection start timing of the fuel injection valves 128. In FIGS. 4A and 4B, a typical signal transition is depicted by an alternate long and short dash line, and a signal transition according to the present embodiment is depicted by a solid line.

Referring to FIG. 4A, in the exhaust process, the exhaust controller 154 opens the exhaust valve 120 through the exhaust valve driving mechanism 118, and starts to displace the exhaust valve 120 from the fully opened position to the fully closed position at the same time at which the fuel gas 174 starts to be injected from the fuel injection valves 128 or after the fuel gas 174 starts to be injected (here, after the fuel gas 174 is injected).

However, when the exhaust controller 154 displaces the exhaust valve 120 from the fully opened position to the fully closed position through the exhaust valve driving mechanism 118, the exhaust controller 154 shifts degree of opening of the exhaust valve 120 in one or more intermediate steps between the fully opened position and the fully closed position. In FIG. 4A, an example in which the degree of opening of the exhaust valve 120 is shifted step-by-step via a first step of a middle degree of opening 220 between the fully opened position and the fully closed position is given. However, the number of steps in the degree of opening is not limited to the one step, and may be arbitrarily selected.

This step-by-step degree of opening can be realized as follows. In detail, the first electromagnetic valve 210 of the exhaust valve driving mechanism 118 is opened only for a shorter time than an opening time required to transition the exhaust valve 120 from the fully opened position to the fully closed position. Then, according to such a ratio, the exhaust valve 120 is displaced up to the intermediate middle degree of opening 220. Thus, when an arbitrary time has elapsed, the first electromagnetic valve 210 is opened only for an opening time required to transition from the middle degree of opening 220 to the fully closed position, and thereby the exhaust valve 120 is displaced to the fully closed position.

In the state in which the exhaust valve 120 is located at the middle degree of opening 220, the pressure loss (resistance) occurs at the exhaust gas 170 passing around the exhaust valve 120, and a flow velocity of the exhaust gas 170 is reduced. The exhaust gas 170 stagnated in the cylinder 110 easily comes out, but the premixed gas 176 moving up in the stroke direction of the piston 112 along with a swirl flow does not come out as easily. Accordingly, an extension of time occurs until the premixed gas 176 is subjected to the blow-by, and as shown by a white arrow of FIG. 4A, the injection start timing of the fuel gas 174 can be advanced.

Further, the exhaust valve 120 may be displaced step by step as well as continuously. For example, in FIG. 4B, the exhaust valve 120 is continuously displaced once or more than once from the fully opened position to the fully closed position according to a 1^{st} or N^{th} order curve (where N is 2 or more). This can be realized by reducing the degree of opening of the first electromagnetic valve 210 of the exhaust valve driving mechanism 118 and suppressing a flow rate of the oil 214a flowing out of the hydraulic chamber 216. Even here, an extension of time occurs until the premixed gas 176 is subjected to the blow-by, and as shown by a white arrow of FIG. 4B, the injection start timing of the fuel gas 174 can be advanced.

With the constitution represented above, the injection time of the fuel gas 174 can be lengthened while the blow-by of the fuel gas 174 is suppressed. However, in the uniflow scavenging 2-cycle engine 100, since the exhaust process and the intake process are carried out almost at the same time, the blow-by of the fuel gas 174 cannot be completely eliminated. Thus, in the present embodiment, the blow-by detector 132 is used to further perform feedback control on the exhaust valve driving mechanism 118 according to the amount of blow-by, and approximate the amount of blow-by to a given target amount.

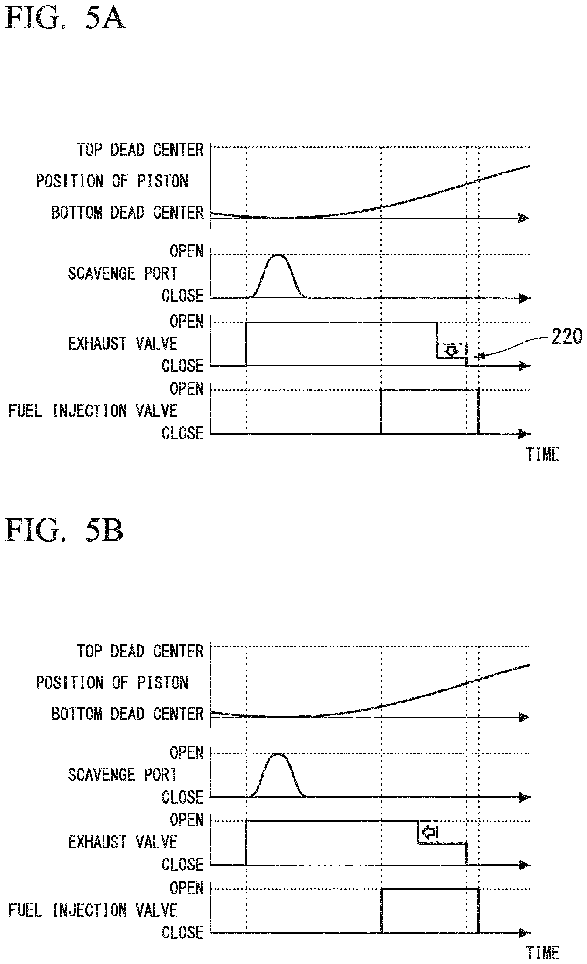

FIGS. 5A and 5B are timing charts for explaining the closing timing of the exhaust valve 120 and the injection start timing of the fuel injection valves 128. In FIGS. 5A and 5B, a signal transition before control is depicted by an alternate long and short dash line, and a signal transition after control is depicted by a solid line.

The exhaust controller 154 controls a magnitude of the degree of opening of the exhaust valve 120 through the exhaust valve driving mechanism 118 according to the amount of blow-by detected by the blow-by detector 132. For example, if the blow-by detector 132 detects a value greater than the target amount set as the amount of blow-by, the exhaust controller 154 reduces the degree of opening of the intermediate step (middle degree of opening 220) of the exhaust valve 120, as depicted by a white arrow of FIG. 5A.

Thereby, a great pressure loss (resistance) occurs due to the exhaust gas 170 passing around the exhaust valve 120, and the blow-by of the premixed gas 176 can be prevented. As a result, the amount of blow-by detected by the blow-by detector 132 is reduced. Further, if a value smaller than the target amount set as the amount of blow-by is detected, the exhaust controller 154 increases the degree of opening of the intermediate step of the exhaust valve 120.

Further, as another control method, the exhaust controller 154 may control a timing at which the exhaust valve 120 is changed to the intermediate degree of opening from the fully opened position to the fully closed position through the exhaust valve driving mechanism 118 according to the amount of blow-by detected by the blow-by detector 132. For example, if the blow-by detector 132 detects a value greater than the target amount set as the amount of blow-by, the exhaust controller 154 advances the timing at which the exhaust valve 120 is changed to the intermediate degree of opening from the fully opened position to the fully closed position, as depicted by a white arrow of FIG. 5B.

Thereby, even in the case of FIG. 5B, like FIG. 5A, a great pressure loss (resistance) occurs due to the exhaust gas 170 passing around the exhaust valve 120, and the blow-by of the premixed gas 176 can be prevented. As a result, the amount of blow-by detected by the blow-by detector 132 is reduced. Further, if a value smaller than the target amount set as the amount of blow-by is detected, the exhaust controller 154 delays the timing at which the exhaust valve 120 is changed to the intermediate degree of opening from the fully opened position to the fully closed position.

Further, even when the timing at which the exhaust valve 120 is changed to the intermediate degree of opening from the fully opened position to the fully closed position as well as a timing at which the exhaust valve 120 is changed from the intermediate degree of opening to the fully closed position is controlled, the same effect can be obtained.

Further, this control can also be applied to the example in which the exhaust valve 120 is displaced step by step as well as the example in which the exhaust valve 120 is continuously displaced as shown in FIG. 4B.

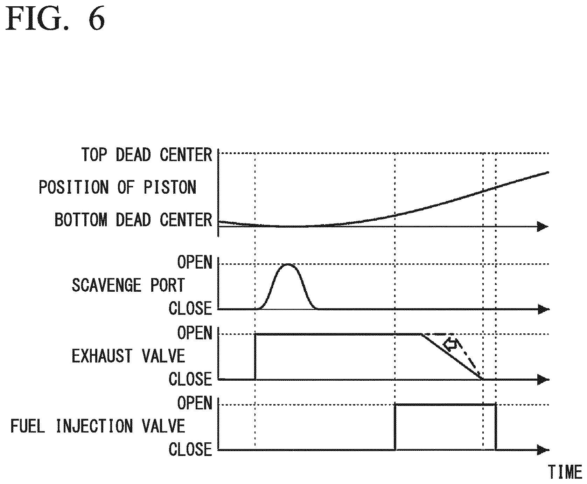

FIG. 6 is a timing chart for explaining the closing timing of the exhaust valve 120 and the injection start timing of the fuel injection valves 128. In FIG. 6, a signal transition before control is depicted by an alternate long and short dash line, and a signal transition after control is depicted by a solid line.

The exhaust controller 154 controls any one or both of displacement start and end points in time of continuous displacement of the exhaust valve 120 through the exhaust valve driving mechanism 118 according to the amount of blow-by detected by the blow-by detector 132. For example, if the blow-by detector 132 detects a value greater than the target amount set as the amount of blow-by, the exhaust controller 154 advances, for instance, the displacement start point in time, as depicted by a white arrow of FIG. 6.

Thereby, even in the case of FIG. 6, like FIGS. 5A and 5B, a great pressure loss (resistance) occurs due to the exhaust gas 170 passing around the exhaust valve 120, and the blow-by of the premixed gas 176 can be prevented. As a result, the amount of blow-by detected by the blow-by detector 132 is reduced. Further, if a value smaller than the target amount set as the amount of blow-by is detected, the exhaust controller 154 delays the displacement start point in time of the exhaust valve 120.

As described above, the uniflow scavenging 2-cycle engine 100 advances the injection start timing of the fuel gas 174 while suppressing the blow-by of the fuel gas 174. Thereby, the abnormal combustion is prevented to enable normal operation at all times.

While preferred embodiments of the present invention have been described with reference to the drawings, it is needless to say that the present invention is not limited to these embodiments. It will be apparent to those skilled in the art that various modifications or alterations can be devised and implemented within the scope described in the claims. Of course, these modifications and alterations are also interpreted as falling within the technical scope of the present invention.

For example, in the aforementioned embodiment, the example in which the exhaust valve driving mechanism 118 is electrically controlled by the exhaust controller 154 has been described. The present invention is not limited to such an example, and the exhaust valve driving mechanism 118 may also be mechanically controlled through a self mechanism.

### [Industrial Applicability]

The present invention can be used in the uniflow scavenging 2-cycle engine that burns the premixed gas generated by injecting the fuel gas into the active gas suctioned from the scavenging ports.

### [Reference Signs List]

100: uniflow scavenging 2-cycle engine
110: cylinder
112: piston
116: exhaust port
118: exhaust valve driving mechanism
120: exhaust valve
122: scavenging port
128: fuel injection valve
132: blow-by detector
140: combustion chamber
154: exhaust controller

## Claims

1. A uniflow scavenging 2-cycle engine (100) comprising:
a cylinder (110) in which a combustion chamber (140) is formed;
a piston (112) configured to slide in the cylinder (110);
scavenging ports (122) formed in an inner circumferential surface of one end side of the cylinder (110) in a stroke direction of the piston (112), and configured to suction an active gas into the combustion chamber (140) according to sliding motion of the piston (112);
fuel injection valves (128) configured to inject a fuel gas into the active gas suctioned from the scavenging ports (122) into the combustion chamber (140) to generate a premixed gas;
an exhaust port (116) formed in the other end of the cylinder (110) in the stroke direction of the piston (112);
an exhaust valve (120) configured to open and close the exhaust port; and
an exhaust valve driving mechanism (118) configured to open and close the exhaust valve (120) such that a time required to displace the exhaust valve (120) from a fully opened position to a fully closed position is longer than a time required to displace the exhaust valve (120) from the fully closed position to the fully opened position,
and **characterized by** comprising:
a blow-by detector (132) configured to detect an amount of a fuel gas component contained in the exhaust gas exhausted from the exhaust port (116) as an amount of blow-by of the fuel gas from the exhaust port (116), and
an exhaust controller (154) configured to output an exhaust valve operation signal for controlling a degree of opening of the exhaust valve (120) to the exhaust valve driving mechanism (118) according to the detected amount of blow-by.

2. The uniflow scavenging 2-cycle engine (100) according to claim 1, wherein the exhaust valve driving mechanism (118) starts to displace the exhaust valve (120) from the fully opened position to the fully closed position at the same time at which the fuel gas starts to be injected from the fuel injection valves (128) or after the fuel gas starts to be injected.

3. The uniflow scavenging 2-cycle engine (100) according to claim 1 or 2, wherein the exhaust valve driving mechanism (118) shifts a degree of opening of the exhaust valve (120) to one or more steps between the fully opened position and the fully closed position step-by-step when displacing the exhaust valve (120) from the fully opened position to the fully closed position.

4. The uniflow scavenging 2-cycle engine (100) according to claim 3, wherein
the exhaust controller (154) controls a magnitude of the degree of opening through the exhaust valve driving mechanism (118) according to the detected amount of blow-by.

5. The uniflow scavenging 2-cycle engine (100) according to claim 3, wherein
the exhaust controller (154) controls a timing at which the exhaust valve (120) is changed from the fully opened position to the degree of opening between the fully opened position and the fully closed position through the exhaust valve driving mechanism (118) according to the detected amount of blow-by.

6. The uniflow scavenging 2-cycle engine (100) according to claim 1 or 2, wherein the exhaust valve driving mechanism (118) continuously shifts the exhaust valve (120) from the fully opened position to the fully closed position when displacing the exhaust valve (120) from the fully opened position to the fully closed position.

7. The uniflow scavenging 2-cycle engine (100) according to claim 6, wherein
the exhaust controller (154) controls any one or both of displacement start and end points in time through the exhaust valve driving mechanism (118) according to the detected amount of blow-by.

## Patentansprüche

1. Zweitaktmotor (100) mit Gleichstromspülung, mit:
einem Zylinder (110), in dem eine Brennkammer (140) ausgebildet ist;
einem Kolben (112), der konfiguriert ist, in dem Zylinder (110) zu gleiten;
Spülöffnungen (122), die in einer Innenumfangsfläche auf einer Endseite des Zylinders (110) in einer Hubrichtung des Kolbens (112) ausgebildet und konfiguriert sind, ein aktives Gas entsprechend der Gleitbewegung des Kolbens (112) in die Brennkammer (140) zu saugen;
Brennstoffeinspritzventilen (128), die konfiguriert sind, ein Brennstoffgas in das aktive Gas einspritzen, das von den Spülöffnungen (122) in die Brennkammer (140) gesaugt wird, um ein vorgemischtes Gas zu erzeugen;
einer Auslassöffnung (116), die am anderen Ende des Zylinders (110) in Hubrichtung des Kolbens (112) ausgebildet ist;
einem Auslassventil (120), das zum Öffnen und Schließen der Auslassöffnung konfiguriert ist; und
einem Auslassventilantriebsmechanismus (118), der konfiguriert ist, das Auslassventil (120) derart zu öffnen und zu schließen, dass eine Zeit, die erforderlich ist, um das Auslassventil (120) von einer vollständig geöffneten Position in eine vollständig geschlossene Position zu verlagern, länger ist als eine Zeit, die erforderlich ist, um das Auslassventil (120) von der vollständig geschlossenen Position in die vollständig geöffnete Position zu verlagern,
und **dadurch gekennzeichnet, dass** er:
einen Blow-by-Detektor (132), der konfiguriert ist, eine Menge einer Brenngaskomponente, die in dem von der Auslassöffnung (116) abgegebenen Abgas enthalten ist, als eine Menge des Blow-by des Brennstoffgases von der Auslassöffnung (116) zu erfassen, und
eine Auslasssteuerung (154) aufweist, die konfiguriert ist, ein Auslassventilbetätigungssignal zum Steuern eines Öffnungsgrads des Auslassventils (120) entsprechend der erfassten Menge des Blow-by an den Auslassventilantriebsmechanismus (118) abzugeben.

2. Zweitaktmotor (100) mit Gleichstromspülung nach Anspruch 1, wobei der Auslassventilantriebsmechanismus (118) zur gleichen Zeit beginnt, das Auslassventil (120) von der vollständig geöffneten Position in die vollständig geschlossene Position zu verlagern, wie das Brennstoffgas beginnt, von den Brennstoffeinspritzventilen (128) eingespritzt zu werden, oder nachdem das Einspritzen des Brennstoffgases begonnen hat.

3. Zweitaktmotor (100) mit Gleichstromspülung nach Anspruch 1 oder 2, wobei der Auslassventilantriebsmechanismus (118) einen Öffnungsgrad des Auslassventils (120) stufenweise auf eine oder mehrere Stufen zwischen der vollständig geöffneten Position und der vollständig geschlossenen Position verschiebt, wenn das Auslassventil (120) von der vollständig geöffneten Position in die vollständig geschlossene Position verlagert wird.

4. Zweitaktmotor (100) mit Gleichstromspülung nach Anspruch 3, wobei
die Auslasssteuerung (154) eine Größe des Öffnungsgrads durch den Auslassventilantriebsmechanismus (118) entsprechend der erfassten Menge des Blow-by steuert.

5. Zweitaktmotor (100) mit Gleichstromspülung nach Anspruch 3, wobei
die Auslasssteuerung (154) einen Zeitpunkt steuert, zu dem das Auslassventil (120) von der vollständig geöffneten Position in einen Öffnungsgrad zwischen der vollständig geöffneten Position und der vollständig geschlossenen Position entsprechend der erfassten Menge des Blow-by durch den Auslassventilantriebsmechanismus (118) verändert wird.

6. Zweitaktmotor (100) mit Gleichstromspülung nach Anspruch 1 oder 2, wobei der Auslassventilantriebsmechanismus (118) das Auslassventil (120) beim Verlagern des Auslassventils (120) von der vollständig geöffneten Position in die vollständig geschlossene Position kontinuierlich verschiebt.

7. Zweitaktmotor (100) mit Gleichstromspülung nach Anspruch 6, wobei
die Auslasssteuerung (154) irgendeinen oder beide der Anfangspunkte und Endpunkte der Verlagerung durch den Auslassventilantriebsmechanismus (118) entsprechend der erfassten Menge des Blow-by steuert.

## Revendications

1. Un moteur à deux temps à balayage uniforme (100) comprenant:
un cylindre (110) dans lequel une chambre de combustion (140) est formée;
un piston (112) configuré pour coulisser dans le cylindre (110);
des orifices de balayage (122) formés dans une surface circonférentielle interne d'un côté d'extrémité du cylindre (110) dans une direction de course du piston (112), et configurés pour aspirer un gaz actif dans la chambre de combustion (140) conformément au mouvement de coulissement du piston (112);
des soupapes d'injection de carburant (128) configurées pour injecter un gaz combustible dans le gaz actif aspiré depuis les orifices de balayage (122) dans la chambre de combustion (140) pour générer un gaz pré-mélangé;
un orifice d'échappement (116) formé dans l'autre extrémité du cylindre (110) dans la direction de la course du piston (112);
une soupape d'échappement (120) configurée pour ouvrir et fermer l'orifice d'échappement;
et
un mécanisme d'entraînement de soupape d'échappement (118) configuré pour ouvrir et fermer la soupape d'échappement (120) de sorte qu'un temps nécessaire pour déplacer la soupape d'échappement (120) d'une position entièrement ouverte à une position entièrement fermée est plus long qu'un temps requis pour déplacer la soupape d'échappement (120) de la position entièrement fermée à la position entièrement ouverte,
et **caractérisé en ce qu'**il comprend:
un détecteur de soufflage (132) configuré pour détecter une quantité d'un composant de gaz combustible présent dans le gaz d'échappement à partir de l'orifice d'échappement (116) comme une quantité de soufflage du gaz combustible à partir de l'orifice d'échappement (116),
et
un contrôleur d'échappement (154) configuré pour délivrer un signal d'opération de la soupape d'échappement afin de commander un degré d'ouverture de la soupape d'échappement (120) au mécanisme d'entraînement de soupape d'échappement (118) en fonction de la quantité de soufflage détectée.

2. Le moteur à deux temps à balayage uniforme (100) selon la revendication 1, dans lequel le mécanisme d'entraînement de soupape d'échappement (118) commence à déplacer la soupape d'échappement (120) de la position entièrement ouverte à la position entièrement fermée au même moment où le gaz combustible commence à être injecté à partir des soupapes d'injection de carburant (128) ou après que le gaz combustible commence à être injecté.

3. Le moteur à deux temps à balayage uniforme (100) selon la revendication 1 ou 2, dans lequel le mécanisme d'entraînement de soupape d'échappement (118) déplace un degré d'ouverture de la soupape d'échappement (120) vers une ou plusieurs étapes entre la position entièrement ouverte et la position entièrement fermée, par étapes, quand la soupape d'échappement (120) est déplacée de la position entièrement ouverte à la position entièrement fermée.

4. Le moteur à deux temps à balayage uniforme (100) selon la revendication 3,
le contrôleur d'échappement (154) commandant une amplitude du degré d'ouverture à travers le mécanisme d'entraînement de soupape d'échappement (118) en fonction de la quantité de soufflage détectée.

5. Le moteur à deux temps à balayage uniforme (100) selon la revendication 3,
dans lequel le contrôleur d'échappement (154) commande un moment auquel la soupape d'échappement (120) passe de la position entièrement ouverte au degré d'ouverture entre la position entièrement ouverte et la position entièrement fermée à travers le mécanisme d'entraînement de soupape d'échappement (118) en fonction de la quantité de soufflage détectée.

6. Le moteur à deux temps à balayage uniforme (100) selon la revendication 1 ou 2, dans lequel le mécanisme d'entraînement de soupape d'échappement (118) déplace continuellement la soupape d'échappement (120) de la position entièrement ouverte à la position entièrement fermée lors du déplacement de la soupape d'échappement (120) de la position entièrement ouverte à la position entièrement fermée.

7. Le moteur à deux temps à balayage uniforme (100) selon la revendication 6,
dans lequel le contrôleur d'échappement (154) commande l'un quelconque ou les deux instants de début et de fin de déplacement à travers le mécanisme d'entraînement de soupape d'échappement (118) en fonction de la quantité de soufflage détectée.
